# FASCICULE DE BREVET EUROPEEN

(11) **EP 3 368 968 B1**
(45) Date de publication et mention de la délivrance du brevet: **02.09.2020**
(21) Numéro de dépôt: 16809121.3
(22) Date de dépôt: 26.10.2016
(51) Int. Cl.: G06F 3/039, B43K 5/00, B43K 8/00, B43K 19/14, B43K 24/08, B43K 29/08, B43K 7/00, B43K 21/00

(54) **INSTRUMENT D'ÉCRITURE À POINTE RÉTRACTABLE COMPRENANT UN COUSSINET POUR ÉCRAN CAPACITIF**
SCHREIBGERÄT MIT EINZIEHBARER SPITZE MIT EINEM PAD FÜR KAPAZITIVEN BILDSCHIRM
WRITING INSTRUMENT WITH RETRACTABLE TIP COMPRISING A PAD FOR CAPACITIVE SCREEN

(30) Priorité: 27.10.2015 FR 1560232
(43) Date de publication de la demande: 05.09.2018
(73) Titulaire: Société BIC, 92110 Clichy (FR)
(72) Inventeur: ROLION, Franck, 95270 Asnieres Sur Oise (FR); BEZ, Arnaud, 92380 Garches (FR)
(74) Mandataire: Cabinet Beau de Loménie
(86) Numéro de dépôt international: PCT/FR2016/052781
(87) Numéro de publication internationale: WO 2017/072445

(56) Documents cités:
- WO-A2-2011/008533
- US-A1- 2014 270 894

## Description

### DOMAINE DE L'INVENTION

L'invention concerne un instrument d'écriture comprenant un coussinet pour écran capacitif, et dont la pointe d'écriture et/ou le coussinet est (sont) rétractable(s) en faisant tourner un premier fût par rapport à un deuxième fût dudit instrument d'écriture.

### ETAT DE LA TECHNIQUE ANTERIEURE

On connait des instruments d'écriture comprenant un coussinet pour écran capacitif. Toutefois, lorsque la pointe d'écriture et/ou le coussinet est (sont) rétractable(s) en faisant tourner un premier fût par rapport à un deuxième fût dudit instrument d'écriture, il n'est pas possible d'utiliser le coussinet en tenant l'instrument d'écriture par le fût qui ne porte pas le coussinet, car le coussinet ne fonctionne pas correctement. Ceci pose un problème notable d'ergonomie pour l'utilisateur. Il existe donc un besoin en ce sens.

WO2011/008533 divulgue un instrument d'écriture selon la préambule de la revendication 1. US2014/0270894 divulgue un stylo de type combiné.

### PRESENTATION DE L'INVENTION

Un mode de réalisation concerne un instrument d'écriture présentant une direction axiale, une direction circonférentielle et une direction radiale, ledit instrument d'écriture comprenant un premier fût et un deuxième fût pouvant pivoter l'un par rapport à l'autre autour de la direction axiale, et présentant une première extrémité distale et une deuxième extrémité distale opposée à la première extrémité distale selon la direction axiale, une pointe d'écriture étant disposée du côté de la première extrémité distale tandis qu'un coussinet pour écran capacitif est disposé du côté de la deuxième extrémité distale, la pointe d'écriture et/ou le coussinet pour écran capacitif étant rétractable(s) (bien entendu, à l'intérieur de l'instrument d'écriture) en faisant pivoter le premier fût par rapport au deuxième fût, dans lequel un fût parmi le premier fût et le deuxième fût, dit fût contacteur, comprend une languette s'étendant selon la direction circonférentielle, ladite languette étant configurée pour établir un contact électrique avec l'autre fût parmi le premier fût et le deuxième fût, dit fût contacté, quelle que soit la position relative du premier fût par rapport au deuxième fût.

De manière générale, la direction axiale correspond à la direction de l'axe des fûts, et la direction radiale est une direction perpendiculaire à la direction axiale. La direction circonférentielle correspond à la direction décrivant un anneau autour de la direction axiale. Les trois directions axiale, radiale et circonférentielle (ou azimutale) correspondent respectivement aux directions définies par la côte, le rayon et l'angle dans un système de coordonnées cylindrique. Enfin, sauf précision contraire, les adjectifs intérieur et extérieur sont utilisés en référence à une direction radiale de sorte que la partie intérieure (i.e. radialement intérieure) d'un élément est plus proche de l'axe que la partie extérieure (i.e. radialement extérieure) du même élément.

Par la suite, et sauf indication contraire, par le terme « conducteur » ou « conductrice » on comprend « conducteur/conductrice de courant électrique ». Inversement, par la suite, et sauf indication contraire, par le terme « isolant » ou « isolante » on comprend « isolant/isolante vis-à-vis du courant électrique ».

On comprend que le coussinet (en anglais « pad ») est une terminaison configurée pour interagir avec un écran capacitif. Le coussinet est conducteur (grâce à son matériau de fabrication, ou grâce à un revêtement). La forme, la souplesse/rigidité et le/les matériaux d'un coussinet ne sont pas limités dans la mesure où ce coussinet est capable d'interagir avec un écran capacitif, c'est-à-dire que son contact avec un écran capacitif est détectable par ce dernier.

On comprend également que le type de la pointe d'écriture n'est pas limité. Par exemple la pointe d'écriture est une pointe à bille, une pointe feutre, une pointe de mine de crayon, une pointe sèche, etc.

On comprend aussi que seule la pointe d'écriture est rétractable lorsqu'on fait pivoter le premier fût par rapport au deuxième fût, ou seul le coussinet est rétractable lorsqu'on fait pivoter le premier fût par rapport au deuxième fût, ou encore la pointe d'écriture et le coussinet sont tous les deux rétractables ou moins une des deux étant rétractable lorsqu'on fait pivoter le premier fût par rapport au deuxième fût. En d'autres termes, l'instrument d'écriture comprend un mécanisme interne qui permet de faire rentrer/sortir uniquement la pointe d'écriture, uniquement le coussinet, ou bien la pointe d'écriture et le coussinet (simultanément ou séquentiellement), lorsqu'on fait pivoter le premier fût par rapport au deuxième fût (et vice versa). Par exemple, le mécanisme interne comprend un dispositif à came hélicoïdale, un système vis/écrou, etc. Bien entendu, lorsque la pointe d'écriture et le coussinet sont tous les deux rétractables, un des deux peut être rétractable par un mécanisme qui n'utilise pas la rotation relative entre les deux fûts, comme par exemple un mécanisme à rochet.

Par « quelle que soit la position relative du premier fût par rapport au deuxième fût », on entend la position relative des fûts pour faire rentrer/sortir la pointe d'écriture et/ou le coussinet de la première, respectivement de la deuxième, extrémité distale. Bien entendu, lorsque le premier fût et/ou le deuxième fût n'est pas monté sur l'instrument d'écriture, il n'y a pas de contact électrique entre ces deux fûts. Par contre, lorsque ces deux fûts sont montés sur l'instrument d'écriture, alors, grâce à la languette, ces deux fûts sont en contact électrique.

Bien entendu, le fût contacteur est le fût parmi le premier fût et le deuxième fût équipé de la languette tandis que le fût contacté est le fût parmi le premier fût et le deuxième fût qui n'est pas équipé de la languette. On comprend que la languette peut former une seule et même pièce avec le fût contacteur, ou bien former une pièce distincte du fût contacteur et être montée sur le fût contacteur par tout moyen connu par l'homme du métier.

La languette s'étendant selon la direction circonférentielle, elle est adapté pour coopérer avec le fût contacté en subissant un minimum de contraintes mécaniques lorsque les fûts sont pivotés l'un par rapport à l'autre pour faire rentrer/sortir la pointe d'écriture et/ou le coussinet. En effet, lors de la rotation d'un fût par rapport à l'autre, l'effort subit par la languette est principalement orienté selon la direction circonférentielle. Ainsi, la direction des principaux efforts mécaniques est parallèle à la direction de la languette, ce qui permet d'assurer une bonne résistance de cette dernière. Par ailleurs, cette configuration permet d'assurer un contact quelle que soit la position relative des fûts. Ainsi, grâce à la languette, on assure un contact électrique entre les deux fûts quelle que soit leur position relative. Bien entendu, on comprend que le premier fût, le deuxième fût, et la languette sont conducteurs, par exemple par leur(s) matériau(x) constitutif(s) ou grâce à un revêtement. L'utilisateur peut donc manipuler l'instrument d'écriture en le tenant par n'importe quel fût pour utiliser le coussinet. Un tel instrument d'écriture est particulièrement facile d'utilisation, et présente une ergonomie améliorée par rapport aux instruments d'écriture de l'état de la technique.

Dans certains modes de réalisation, la languette est une languette élastique. Au sens de l'invention, une languette « élastique » est plus facilement déformable en flexion que les fûts. En d'autres termes, la rigidité en flexion de la languette est au moins deux fois inférieure à la rigidité en déformation radiale des fûts (i.e. la souplesse de la languette est au moins deux fois plus grande que celle des fûts). Selon une variante, la rigidité en flexion de la languette est au moins cinq fois, voire dix fois, inférieure à la rigidité en déformation radiale des fûts (i.e. la souplesse de la languette est au moins cinq fois, voire dix fois, plus grande que celle des fûts).

Grâce à l'élasticité de la languette, on peut facilement assurer un contact permanent avec le fût contacté.

Dans certains modes de réalisation, au moins une portion de la languette coopère en appui avec le fût contacté quelle que soit la position relative du premier fût par rapport au deuxième fût.

Un tel appui permet d'assurer un contact mécanique permanent entre la languette et le fût contacté, grâce à quoi on assure également un contact électrique permanent entre ces deux éléments. Par exemple, cet appui peut résulter d'une déformation élastique permanente de la languette lorsque les fûts sont assemblés au sein de l'instrument d'écriture.

Dans certains modes de réalisation, le fût contacteur présente une portion d'emmanchement emmanchée à l'intérieur du fût contacté, la portion d'emmanchement comprenant ladite languette.

La languette est ainsi disposée à l'intérieur du fût contacté. Ceci permet d'assurer une bonne protection de la languette vis-à-vis des saletés et des agressions extérieures, grâce à quoi on assure une meilleure qualité et fiabilité du contact électrique entre la languette et le fût contacté. Ceci présente également l'avantage de masquer la languette à l'intérieur de l'instrument d'écriture, grâce à quoi on préserve l'esthétique et l'ergonomie de l'instrument d'écriture.

Dans certains modes de réalisation, la languette s'étend dans un jour s'étendant selon la direction circonférentielle, depuis un bord dudit jour.

On comprend que le jour présente un bord, la languette étant reliée au fût contacteur par une portion du bord dudit jour. Ainsi, la languette est disposée dans un jour. Ceci procure une certaine protection à la languette, grâce à quoi on évite de la détériorer, notamment lors de l'assemblage initial de l'instrument d'écriture et pendant la rotation relative des fûts. On améliore donc la fiabilité du contact électrique.

Dans certains modes de réalisation, la languette présente une forme de portion d'anneau présentant une première extrémité circonférentielle et une deuxième extrémité circonférentielle opposée à la première extrémité circonférentielle, la première extrémité circonférentielle étant reliée au fût contacteur tandis qu'une portion de deuxième extrémité circonférentielle est configurée pour établir le contact électrique avec le fût contacté.

De manière générale, par « portion d'extrémité », on entend la portion qui s'étend depuis ladite extrémité de la languette sur maximum 50% de la longueur circonférentielle de la languette.

On comprend que la portion de deuxième extrémité circonférentielle coopère en tout ou partie, par exemple via la deuxième extrémité circonférentielle, mais pas nécessairement, avec le fût contacté de manière à établir un contact électrique. Une telle languette est particulièrement facile à fabriquer, par exemple lors de la fabrication par moulage du fût contacteur formant une seule et même pièce avec la languette. Par ailleurs, une telle languette présente une structure simple et fiable, procurant au contact électrique une certaine fiabilité dans le temps.

Dans certains modes de réalisation, la languette et le fût contacteur forment une seule et même pièce. Ceci facilite la fabrication de l'ensemble et l'assemblage de l'instrument d'écriture. Ceci permet également d'assurer une parfaite liaison électrique entre le fût contacteur et la languette.

Dans certains modes de réalisation, la languette présente une portion d'extrémité distale, une saillie s'étendant radialement depuis ladite portion d'extrémité distale.

Par « portion d'extrémité distale », on entend la portion qui s'étend depuis l'extrémité distale de la languette sur maximum 50% de la longueur circonférentielle de la languette. On comprend que le contact entre la languette et le fût contacté est réalisé notamment par cette saillie radiale. Une telle saille permet d'assurer un appui selon la direction radiale entre la languette et le fût contacté quelle que soit la position relative des deux fûts. Une telle saillie est simple à réaliser et permet d'obtenir un contact électrique efficace et fiable.

Dans certains modes de réalisation, la languette est formée par une poutre iso-contraintes.

Une poutre iso-contrainte est une poutre où, lorsqu'elle est soumise à un effort, les contraintes sont égales sur toute la longueur de la poutre. Notamment, la section transversale d'une telle poutre est évolutive sur toute la longueur de ladite poutre. Ceci permet d'éviter toute concentration de contrainte dans une portion de la poutre afin d'améliorer notamment sa résistance au fluage. On améliore ainsi la fiabilité du contact électrique entre la languette et le fût contacté. Par exemple, la poutre présente une section transversale décroissante depuis son extrémité proximale vers son extrémité distale. Par exemple, la section de la poutre est rectangulaire, ce qui présente une certaine facilité pour la fabrication, mais la forme de la section n'est bien entendu pas limitée.

Dans certains modes de réalisation, le premier fût et le deuxième fût sont assemblés l'un avec l'autre par l'intermédiaire d'un anneau d'encliquetage.

On comprend que l'anneau d'encliquetage forme une pièce intermédiaire dans l'assemblage du premier fût avec le deuxième fût. On comprend par ailleurs que l'assemblage entre l'anneau d'encliquetage et chaque fût, respectivement, est réalisé par encliquetage. L'encliquetage (ou clipsage) est un mode d'assemblage de deux parties par engagement et déformation élastique (en général déformation locale d'une partie seulement d'une pièce, par exemple d'une languette, ou d'un élément périphérique de ladite pièce, ou encore par déformation de l'ensemble des pièces impliquées dans l'assemblage). Lorsque les deux parties sont engagées dans la position d'encliquetage, les parties ont généralement repris leur forme initiale et ne présentent plus de déformation élastique (ou une déformation élastique moindre). Lorsque les deux parties sont engagées l'une avec l'autre dans la position d'encliquetage, elles coopèrent l'une avec l'autre de manière à s'opposer aux, voire bloquer, les mouvements relatifs desdites parties dans le sens du dégagement (sens opposé au sens de l'engagement). En position d'encliquetage, les deux parties peuvent en outre coopérer de manière à s'opposer à, voire bloquer, leurs mouvements relatifs dans le sens du prolongement de l'engagement, au-delà de la position d'encliquetage. Un assemblage par encliquetage présente l'avantage d'être facile à mettre en œuvre et fiable. Selon une variante, l'encliquetage entre l'anneau et les fûts est irréversible (par exemple grâce à une structure autobloquante ou une rigidité des parties adéquate), grâce à quoi l'instrument d'écriture n'est pas démontable (i.e. pas démontable sans le détruire), ce qui améliore encore sa fiabilité.

Dans certains modes de réalisation, la portion d'emmanchement comprend une partie de support supportant l'anneau d'encliquetage, la languette étant disposée dans une partie distincte de ladite partie de support.

Ainsi, des fonctions distinctes (l'assemblage d'une part, le contact électrique d'autre part) sont réalisés par des parties différentes, grâce à quoi on fiabilise chaque fonction, en particulier le contact électrique entre la languette et le fût contacté.

Dans certains modes de réalisation, le fût contacté présente une surface de contact annulaire configurée pour coopérer avec au moins une partie de la languette.

On comprend que la languette coopère en tout ou partie avec la surface de contact annulaire. En particulier, la languette coopère par contact glissant, voire par appui glissant, avec la surface de contact. On s'assure ainsi que la languette est toujours en contact avec le fût contacté, via la surface de contact, et ce quelle que soit la position relative des fûts, notamment leur position relative selon la direction circonférentielle.

Dans certains modes de réalisation, le premier fût et le deuxième fût sont en matériau polymérique conducteur de courant électrique.

Un matériau polymérique conducteur de courant électrique est par exemple un matériau polymérique comprenant, dans sa masse, une charge comprenant au moins un matériau conducteur de courant électrique.

Par exemple, le matériau polymérique est un thermoplastique. Par exemple, le matériau polymérique comprend un ou plusieurs des composés parmi l'acrylonitrile butadiène styrène (également connus sous l'acronyme ABS), acrylonitrile méthacrylate de méthyle (également connus sous l'acronyme AMMA), acrylonitrile styrène acrylate (également connus sous l'acronyme ASA), acétate de cellulose (également connus sous l'acronyme CA), acétobutyrate de cellulose (également connus sous l'acronyme CAB), acétopropionate de cellulose (également connus sous l'acronyme CAP), polystyrène expansé (également connus sous l'acronyme EPS), éthylène tétrafluoroéthylène (également connus sous l'acronyme ETFE), éthylène-alcool vinylique (également connus sous l'acronyme EVAL ou EVOH), perfluoro éthylène propylène (également connus sous l'acronyme FEP ou PFEP), méthylméthacrylate-butadiène-styrène (également connus sous l'acronyme MBS), méthylcellulose (également connus sous l'acronyme MC), polyamide (également connus sous l'acronyme PA), polycaprolactame (également connus sous l'acronyme PA6), polyamide-imide (également connus sous l'acronyme PAI), polyacrylonitrile (également connus sous l'acronyme PAN), polybutène-1 (également connus sous l'acronyme PB-1), polybutylène téréphtalate ou poly(téréphtalate de butylène) (également connus sous l'acronyme PBT), polycarbonate (également connus sous l'acronyme PC), polychlorotrifluoroéthylène (également connus sous l'acronyme PCTFE), polyéthylène (également connus sous l'acronyme PE), polyéthylène haute densité (également connus sous l'acronyme PE-HD), polyéthylène basse densité (également connus sous l'acronyme PE-LD), polyéthylène à basse densité linéaire (également connus sous l'acronyme PE-LLD), polyéthylène à ultra haute masse molaire (également connus sous l'acronyme PE-UHMW), copolymère bloc éther-amide (également connus sous l'acronyme PEBA), polyestercarbonate (également connus sous l'acronyme PEC), polyétheréthercétone (également connus sous l'acronyme PEEK), polyétherimide (également connus sous l'acronyme PEI), polyéthercétone (également connus sous l'acronyme PEK), poly(naphtalate d'éthylène) (également connus sous l'acronyme PEN), polyéthersulfone (également connus sous l'acronyme PESU), poly(éthylène téréphtalate) (également connus sous l'acronyme PET), perfluoroalkoxy (également connus sous l'acronyme PFA), polycétone (également connus sous l'acronyme PK), polyméthacrylate de méthyle (également connus sous l'acronyme PMMA), polyméthylpentène (également connus sous l'acronyme PMP), polyoxyméthylène ou polyacétal ou polyformaldéhyde (également connus sous l'acronyme POM), polypropylène ou polypropène (également connus sous l'acronyme PP), poly(phénylène éther) (également connus sous l'acronyme PPE), poly(oxyde de phénylène) (également connus sous l'acronyme PPO), poly(oxyde de propylène) (également connus sous l'acronyme PPOX), poly(sulfure de phénylène) (également connus sous l'acronyme PPS), polystyrène (également connus sous l'acronyme PS), polysulfone (également connus sous l'acronyme PSU), polytétrafluoroéthylène (également connus sous l'acronyme PTFE), polyuréthane (également connus sous l'acronyme PUR), poly(acétate de vinyle) (également connus sous l'acronyme PVAC), poly(alcool vinylique) (également connus sous l'acronyme PVAL), polychlorure de vinyle (également connus sous l'acronyme PVC), polyfluorure de vinylidène (également connus sous l'acronyme PVDF), poly(fluorure de vinyle) (également connus sous l'acronyme PVF), styrène-acrylonitrile (également connus sous l'acronyme SAN), silicone (également connus sous l'acronyme SI), styrène anhydride maléique (également connus sous l'acronyme SSMA ou SMAnh), polyoléfine, polyester. De manière plus générale, le matériau polymérique est par exemple un matériau polymérique organique de synthèse ou polymère organique de synthèse.

Une charge est un matériau additif introduit dans le matériau polymérique lors de la fabrication des fûts. Ainsi, un matériau polymérique chargé avec au moins un matériau conducteur est un matériau polymérique dans la masse duquel on a introduit au moins un matériau conducteur. Grâce à cette charge en matériau(x) conducteur(s) les fûts présentent des propriétés conductrices. Par exemple, le matériau polymérique est chargé d'au moins 2% en masse en matériau conducteur.

Par exemple, la charge en matériau conducteur comprend un ou plusieurs des composés parmi le noir de carbone, les nanotubes de carbone, ou des particules métalliques. De tels matériaux sont particulièrement bien adaptés à la fabrication des fûts à échelle industrielle.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1A représente un instrument d'écriture vu en perspective,
- la figure 1B représente l'instrument d'écriture de la figure 1A vu en coupe selon le plan IB de la figure 1A,
- la figure 2A représente l'instrument d'écriture de la figure 1A, vu en perspective en éclaté,
- la figure 2B représente un détail de la loupe IIB figure 2A,
- la figure 3 est une vue en coupe du deuxième fût selon le plan III de la figure 2,
- la figure 4A est une vue selon la flèche IV de la figure 2A,
- la figure 4B est une vue détaillé de la languette de la figure 4A, et
- la figure 5 est une vue en coupe selon la plan V de la figure 4A.

### DESCRIPTION DETAILLEE D'EXEMPLES DE REALISATION

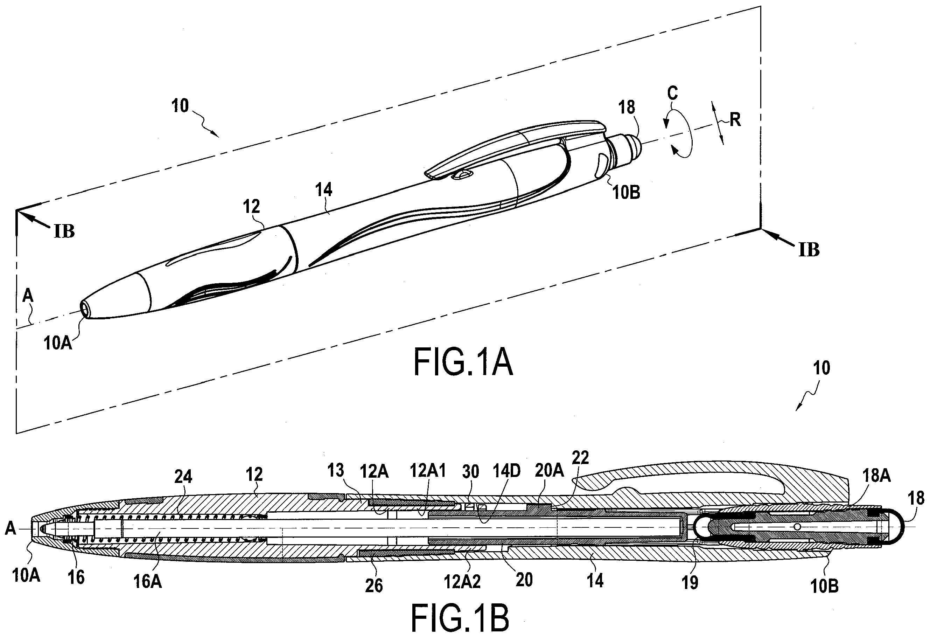

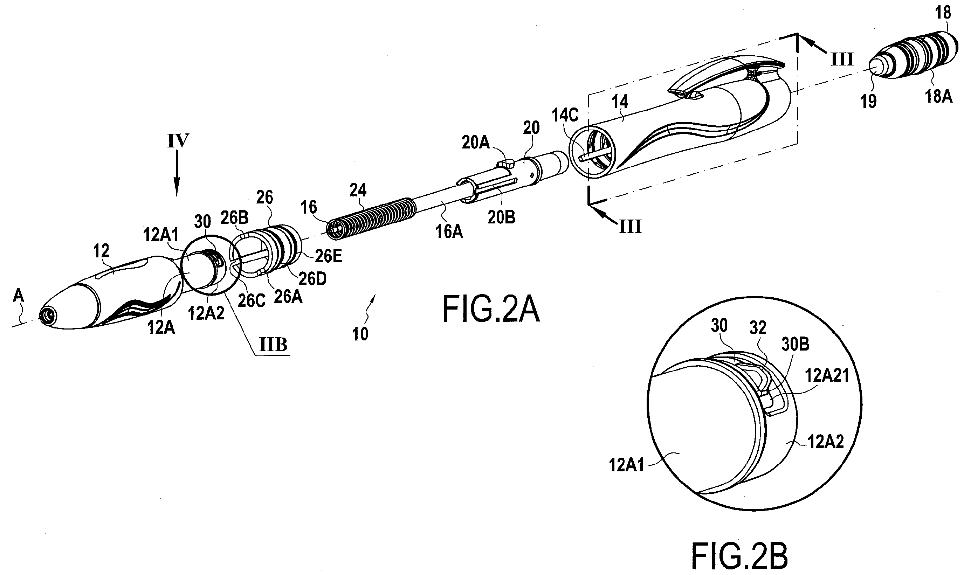

Un mode de réalisation d'instrument d'écriture selon l'invention est décrit en référence aux figures 1A à 5.

Les figures 1A et 1B représentent un instrument d'écriture 10 présentant une direction axiale A, une direction radiale R et une direction circonférentielle C. L'instrument d'écriture 10 comprend un premier fût 12 et un deuxième fût 14. Les fûts 12 et 14 peuvent pivoter autour de la direction A (i.e. sont déplacés selon la direction C) l'un par rapport à l'autre. L'instrument d'écriture 10 présente une première extrémité distale 10A et une deuxième extrémité distale 10B, opposée à la première extrémité distale 10A selon la direction axiale A. La première extrémité distale 10A de l'instrument d'écriture est formée par l'extrémité distale du premier fût 12 tandis que la deuxième extrémité distale 10B de l'instrument d'écriture 10 est formée par l'extrémité distale du deuxième fût 14.

Une pointe d'écriture 16 est disposée du côté de la première extrémité distale 10A, dans cet exemple la pointe 16 étant rétractable, tandis qu'un coussinet 18 pour écran capacitif est disposé du côté de la deuxième extrémité distale 10B. La pointe d'écriture 16 est rétractable en faisant pivoter le premier fût 12 par rapport au deuxième fût 14, ou inversement, à l'aide d'un mécanisme décrit ultérieurement. Dans cet exemple, le coussinet 18 est amovible du deuxième fût 14 et est monté sur une douille 18A portant un autre coussinet 19 du côté opposé au coussinet 18 selon la direction axiale A. Ainsi, l'utilisateur peut choisir en fonction de ses besoins d'utiliser soit le coussinet 18 soit le coussinet 19 en inversant le montage de la douille 18A sur le deuxième fût 14. Cette douille 18A est encliquetée avec le deuxième fût 14. Bien entendu, la douille 18A est configurée de telle sorte qu'il y ait un contact électrique permanent, lorsqu'elle est montée sur le deuxième fût 14, entre les coussinets 18 et 19 et le deuxième fût 14.

Selon une variante, le coussinet 18 est monté de manière fixe (i.e. n'est pas amovible ni rétractable) sur le deuxième fût 14, la pointe d'écriture 16 étant rétractable. Selon encore une autre variante, le coussinet 18 est rétractable dans le deuxième fût 14 tandis que la pointe d'écriture 16 est rétractable ou pas. Lorsque le coussinet 18 est rétractable mais pas la pointe d'écriture 16, il est rétractable en faisant tourner le premier fût 12 par rapport au deuxième fût 14, par exemple à l'aide d'un mécanisme interne similaire à celui décrit ci-après pour la pointe d'écriture 16.

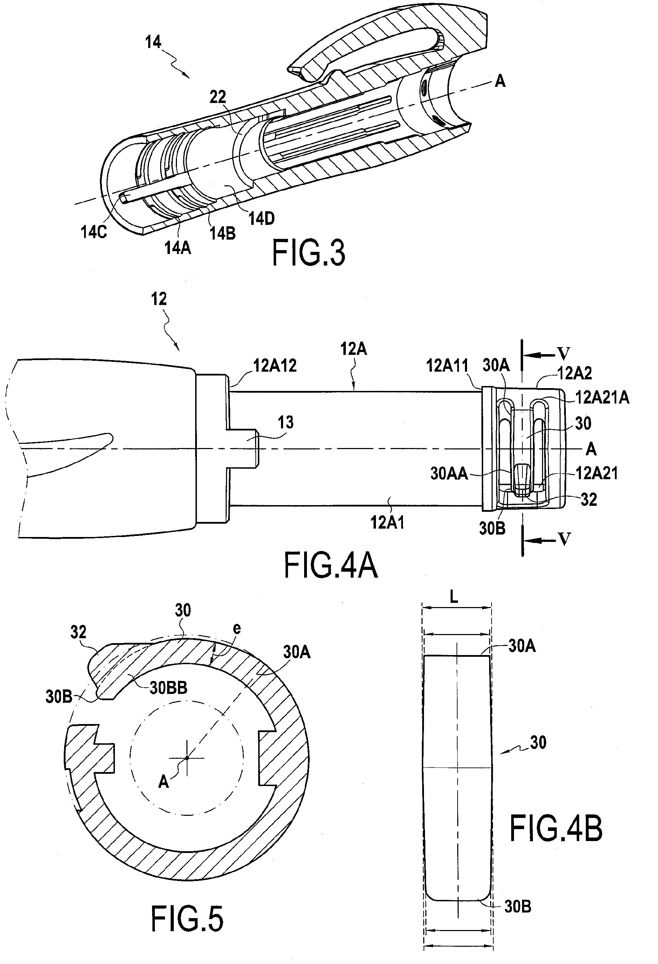

Dans cet exemple, la pointe d'écriture 16 est rétractable grâce à un mécanisme à came hélicoïdale. Ce mécanisme comprend un chariot 20 mobile en translation selon la direction axiale A, une saillie radiale 20A du chariot 20 coopérant avec une came hélicoïdale 22 formée sur la surface interne du deuxième fût 14 (voir figure 3). Par ailleurs, le chariot 20 est bloqué en rotation par rapport au premier fût 12, dans cet exemple grâce à une rainure axiale 20B engagée avec une nervure complémentaire (non représentée) disposée sur la surface interne du premier fût 12. Ainsi, lorsqu'on fait tourner le premier fût 12 par rapport au deuxième fut 14 (bien entendu autour de la direction axiale A), la coopération de l'ergot 20A avec la came 22 d'une part et le blocage en rotation du chariot 20 par rapport au premier fût 12 d'autre part permettent de déplacer en translation selon la direction axiale A ledit chariot 20 au sein de l'instrument d'écriture 10. Le chariot 20 portant le réservoir d'encre 16A sur lequel la pointe d'écriture 16 est montée, le déplacement du chariot 20 permet de faire sortir/rentrer la pointe d'écriture 16 depuis/dans le premier fût 12 via la premier extrémité 10A. Un ressort 24 assiste le retrait de la pointe 16 dans le premier fût 12 et assure, via le réservoir 16A, un contact permanent entre la saillie 20A et la came 22.

On va maintenant décrire plus en détail le montage du premier fût 12 avec le deuxième fût 14. Le premier fût 12 et le deuxième fût 14 sont assemblés l'un avec l'autre par l'intermédiaire d'un anneau d'encliquetage 26. Plus particulièrement, le premier fût 12 présente une portion d'emmanchement 12A emmanchée à l'intérieur du deuxième fût 14, cette portion d'emmanchement 12A comprenant une partie de support 12A1 supportant l'anneau d'encliquetage 26. Cette partie de support 12A1 forme un palier pour l'anneau d'encliquetage 26, et présente un ergot 13 coopérant en butée avec des épaulements 26A et 26B, s'étendant axialement, de l'anneau d'encliquetage 26 pour limiter sa course circonférentielle. L'anneau 26 est bloqué en translation selon la direction axiale A sur la partie de support 12A1 grâce à des épaulements annulaires 12A11 et 12A12 de la partie de support 12A1. L'anneau 26 présente une fente axiale 26C s'étendant sur toute la longueur axiale de l'anneau 26, qui permet des déformations radiales de l'anneau 26, grâce à quoi on peut facilement monter l'anneau 26 sur la partie de support 12A1 par emmanchement autour de la portion d'emmanchement 12A jusqu'à la partie de support 12A1. Par ailleurs, l'anneau 26 présente deux nervures annulaires 26D et 26E qui coopèrent par encliquetage respectivement avec des rainures annulaires complémentaires 14A et 14B disposées sur la surface interne du deuxième fût 14. De plus, une nervure axiale 14C disposée sur la surface interne du deuxième fût 14 est engagée dans la fente 26C de l'anneau 26, grâce à quoi l'anneau 26 est couplé en rotation avec le deuxième fût 14. Ainsi, l'ergot 13 du premier fût 12 limite la course des mouvements relatifs en rotation du premier fût 12 par rapport au deuxième fût 14 via l'anneau 26.

Bien entendu, cet exemple de montage des fûts n'est pas limitatif, et tout autre type d'assemblage des fûts au sein de l'instrument d'écriture est envisageable, dans la mesure où les fût peuvent pivoter l'un par rapport à l'autre de manière à faire rentrer/sortir la pointe d'écriture et/ou le coussinet.

Le premier fût 12 présente une languette 30 s'étendant selon la direction circonférentielle, cette languette 30 étant configurée pour établir un contact électrique entre le premier fût 12 et le deuxième fût 14. Dans cet exemple, le premier fût 12 étant équipé de la languette 30 forme un fût contacteur tandis que le deuxième fût 14 forme un fût contacté.

Plus particulièrement, dans cet exemple, la languette 30 forme une seule et même pièce avec le premier fût 12. La languette 30 est disposée dans une portion distale 12A2 de la portion d'emmanchement 12A du premier fût 12. La languette 30 est donc disposée dans une partie distincte de la partie de support 12A1. La portion distale 12A2 est emmanchée à l'intérieur du deuxième fût 14.

La languette 30 est disposée dans un jour 12A21 s'étendant selon la direction circonférentielle C. La languette 30 s'étend dans le jour 12A21 depuis un bord 12A21A dudit jour 12A21. La languette 30 présente une forme générale de portion d'anneau présentant une première extrémité circonférentielle 30A et une deuxième extrémité circonférentielle 30B opposée, selon la direction circonférentielle, à la première extrémité circonférentielle 30A. La languette 30 est reliée au premier fût 12 via la première extrémité circonférentielle 30A tandis que la portion de deuxième extrémité circonférentielle 30BB est configurée pour établir un contact électrique avec le deuxième fût 14. En d'autres termes, dans cet exemple, la deuxième extrémité circonférentielle 30B forme l'extrémité distale de la languette 30 tandis que la première extrémité circonférentielle 30A forme l'extrémité proximale de la languette 30. Une saillie 32 s'étend radialement vers l'extérieur depuis une portion d'extrémité distale, ou portion de deuxième extrémité circonférentielle, 30BB de la languette 30. On comprend que dans cet exemple le rayon du premier fût 12 au niveau de la saillie 32 est plus grand que le rayon interne de la partie correspondant du deuxième fût 14, grâce à quoi on s'assure que la languette 30 coopère en appui avec le deuxième fût 14 via la saillie 32.

La languette 30 est formée par une poutre iso-contraintes. Dans cet exemple, la poutre iso-contraintes présente une épaisseur radiale E décroissante sur toute la longueur circonférentielle de la languette 30 (voir figure 5) depuis l'extrémité proximale 30B vers l'extrémité distale 30A. Par ailleurs, la largueur axiale L de la poutre est croissante puis décroissante sur toute la longueur circonférentielle de la languette 30 (voir figure 4B), depuis l'extrémité proximale 30B vers l'extrémité distale 30A. Une telle forme présente l'avantage d'être particulièrement bien adaptée aux procédés de fabrication par moulage.

Le deuxième fût 14 présente sur sa paroi intérieure une surface de contact annulaire 14D qui coopère en appui glissant avec la saillie 32 de la languette 30. Ainsi, lorsque les fûts sont pivotés l'un par rapport à l'autre, la languette 30 reste constamment en appui, via la saillie 32, avec la surface annulaire 14D, assurant un contact électrique entre les deux fûts, quelle que soit leur position relative. La continuité électrique entre le premier fût 12 et le deuxième fût 14 étant assurée, l'utilisateur peut donc manipuler l'instrument d'écriture 10 via le premier fût 12 uniquement pour utiliser le coussinet 18.

Bien entendu, le premier fût 12, la languette 30, et le deuxième fût 14 sont fabriqués dans un matériau conducteur, dans cet exemple un matériau polymérique conducteur. De même la douille 18A sur laquelle est monté le coussinet 18 (et 19) est également en matériau conducteur, dans cet exemple un matériau polymérique conducteur, grâce à quoi la continuité électrique est assurée entre le deuxième fût 14 et le coussinet 18 (et 19). On notera que la douille 18A n'étant pas prévue pour bouger par rapport au deuxième fût 14, hormis pour mettre l'embout 19 en position d'utilisation à la place de l'embout 18 et vice versa, les éléments d'encliquetage non référencés permettent un contact suffisamment serré pour assurer également un contact électrique entre la douille 18A et le deuxième fût 14, et donc entre le coussinet 18 (et 19) et le deuxième fût 14. Le premier fût 12 étant mobile en rotation par rapport au deuxième fût 14, les éléments d'encliquetage ne permettent pas un contact suffisamment serré pour également assurer un contact électrique entre ces deux fûts. C'est pourquoi la languette de contact 30 est nécessaire pour assurer le contact électrique entre le premier fût 12 et le deuxième fût 14, mais qu'une telle languette n'est pas nécessaire pour assurer le contact électrique entre le deuxième fût 14 et la douille 18A. Par ailleurs, grâce à la languette 30, il n'est pas nécessaire que la bague de verrouillage soit en matériau conducteur. Ainsi, la douille est par exemple fabriquée à partir d'un matériau polymérique non conducteur présentant une bonne résistance à l'usure (i.e. présente une dureté supérieure à la dureté des fûts) et un faible coefficient de friction avec les fûts (i.e. un coefficient de friction inférieure au coefficient de friction des fûts).

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications.

## Revendications

1. Instrument d'écriture (10) présentant une direction axiale (A), une direction circonférentielle (C) et une direction radiale (R), ledit instrument d'écriture comprenant un premier fût (12) et un deuxième fût (14) pouvant pivoter l'un par rapport à l'autre autour de la direction axiale (A), et présentant une première extrémité distale (10A) et une deuxième extrémité distale (10B) opposée à la première extrémité distale (10A) selon la direction axiale (A), une pointe d'écriture (16) étant disposée du côté de la première extrémité distale (10A) tandis qu'un coussinet (18) pour écran capacitif est disposé du côté de la deuxième extrémité distale (10B), la pointe d'écriture (16) et/ou le coussinet (18) pour écran capacitif étant rétractable(s) en faisant pivoter le premier fût (12) par rapport au deuxième fût (14), **caractérisé en ce que** un fût parmi le premier fût (12) et le deuxième fût (14), dit fût contacteur, comprend une languette (30) s'étendant selon la direction circonférentielle (C), ladite languette étant configurée pour établir un contact électrique avec l'autre fût parmi le premier fût (12) et le deuxième fût (14), dit fût contacté, quelle que soit la position relative du premier fût (12) par rapport au deuxième fût (14).

2. Instrument d'écriture (10) selon la revendication 1, dans lequel au moins une portion de la languette (30) coopère en appui avec le fût contacté (14) quelle que soit la position relative du premier fût (12) par rapport au deuxième fût (14).

3. Instrument d'écriture (10) selon la revendication 1 ou 2, dans lequel le fût contacteur (12) présente une portion d'emmanchement (12A) emmanchée à l'intérieur du fût contacté (14), la portion d'emmanchement (12A) comprenant ladite languette (30).

4. Instrument d'écriture (10) selon l'une quelconque des revendications 1 à 3, dans lequel la languette (30) s'étend dans un jour (12A21) s'étendant selon la direction circonférentielle (C), depuis un bord (12A21A) dudit jour.

5. Instrument d'écriture (10) selon l'une quelconque des revendication 1 à 4, dans lequel la languette (30) présente une forme de portion d'anneau présentant une première extrémité circonférentielle (30A) et une deuxième extrémité circonférentielle (30B) opposée à la première extrémité circonférentielle (30A), la première extrémité circonférentielle (30A) étant reliée au fût contacteur (12) tandis qu'une portion de deuxième extrémité circonférentielle (30BB) est configurée pour établir le contact électrique avec le fût contacté (14).

6. Instrument d'écriture (10) selon l'une quelconque des revendications 1 à 5, dans lequel la languette (30) présente une portion d'extrémité distale (30ABB), une saillie (32) s'étendant radialement depuis ladite portion d'extrémité distale (30BB).

7. Instrument d'écriture (10) selon l'une quelconque des revendications 1 à 6, dans lequel la languette (30) est formée par une poutre iso-contraintes.

8. Instrument d'écriture (10) selon l'une quelconque des revendications 1 à 7, dans lequel le premier fût (12) et le deuxième fût (14) sont assemblés l'un avec l'autre par l'intermédiaire d'un anneau d'encliquetage (26).

9. Instrument d'écriture (10) selon les revendications 3 et 8, dans lequel la portion d'emmanchement (12A) comprend une partie de support (12A1) supportant l'anneau d'encliquetage (26), la languette (30) étant disposée dans une partie (12A2) distincte de ladite partie de support (12A1).

10. Instrument d'écriture (10) selon l'une quelconque des revendications 1 à 9, dans lequel le fût contacté (14) présente une surface de contact annulaire (14D) configurée pour coopérer avec au moins une partie de la languette (30).

11. Instrument d'écriture (10) selon l'une quelconque des revendications 1 à 9, dans lequel le premier fût (12) et le deuxième fût (12) sont en matériau polymérique conducteur de courant électrique.

## Patentansprüche

1. Schreibgerät (10), das eine axiale Richtung (A), eine Umfangsrichtung (C) und eine radiale Richtung (R) aufweist, porte-minewobei das Schreibgerät eine erste Hülse (12) und eine zweite Hülse (14) umfasst, die sich relativ zueinander um die axiale Richtung (A) drehen können, und das ein erstes distales Ende (10A) und ein zweites distales Ende (10B) aufweist, das dem ersten distalen Ende (10A) in axialer Richtung (A) gegenüberliegt, wobei eine Schreibspitze (16) auf der Seite des ersten distalen Endes (10A) angeordnet ist, während ein Pad (18) für einen kapazitiven Bildschirm auf der Seite des zweiten distalen Endes (10B) angeordnet ist, wobei die Schreibspitze (16) und/oder das Pad (18) für einen kapazitiven Bildschirm durch Drehen der ersten Hülse (12) relativ zur zweiten Hülse (14) einziehbar sind/ist, **dadurch gekennzeichnet, dass** eine der ersten (12) und zweiten (14) Hülsen, als kontaktgebende Hülse bezeichnet, eine Zunge (30) umfasst, die sich in Umfangsrichtung (C) erstreckt, wobei die Zunge so konfiguriert ist, dass sie unabhängig von der relativen Position der ersten Hülse (12) zur zweiten (14) Hülse einen elektrischen Kontakt mit der anderen der ersten (12) und der zweiten (14) Hülse herstellt.

2. Schreibgerät (10) nach Anspruch 1, wobei mindestens ein Abschnitt der Zunge (30) unabhängig von der relativen Position der ersten Hülse (12) zur zweiten Hülse (14) in anliegendem Eingriff mit der kontaktierten Hülse (14) steht.

3. Schreibgerät (10) nach Anspruch 1 oder 2, wobei die kontaktgebende Hülse (12) einen Einsteckabschnitt (12A) aufweist, der in die kontaktierte Hülse (14) eingesteckt ist, wobei der Einsteckabschnitt (12A) die Zunge (30) umfasst.

4. Schreibgerät (10) nach einem der Ansprüche 1 bis 3, wobei die Zunge (30) sich in eine Lasche (12A21), die sich in Umfangsrichtung (C) erstreckt, von einem Rand (12A21A) der Lasche aus erstreckt.

5. Schreibgerät (10) nach einem der Ansprüche 1 bis 4, wobei die Zunge (30) die Form eines Ringabschnitts mit einem ersten Umfangsende (30A) und einem dem ersten Umfangsende (30A) gegenüberliegenden zweiten Umfangsende (30B) hat, wobei das erste Umfangsende (30A) mit der kontaktgebenden Hülse (12) verbunden ist, während ein Abschnitt des zweiten Umfangsendes (30BB) so konfiguriert ist, dass er einen elektrischen Kontakt mit der kontaktierten Hülse (14) herstellt.

6. Schreibgerät (10) nach einem der Ansprüche 1 bis 5, wobei die Zunge (30) einen distalen Endabschnitt (30ABB) aufweist und ein Vorsprung (32) sich radial von dem distalen Endabschnitt (30BB) aus erstreckt.

7. Schreibgerät (10) nach einem der Ansprüche 1 bis 6, wobei die Zunge (30) von einem gleichmäßig beanspruchten Träger gebildet wird.

8. Schreibgerät (10) nach einem der Ansprüche 1 bis 7, wobei die erste Hülse (12) und die zweite Hülse (14) durch einen Rastring (26) miteinander verbunden sind.

9. Schreibgerät (10) nach den Ansprüchen 3 und 8, wobei der Einsteckabschnitt (12A) einen Abstützteil (12A1) umfasst, der den Rastring (26) abstützt, und die Zunge (30) in einem von dem Abstützteil (12A1) verschiedenen Teil (12A2) angeordnet ist.

10. Schreibgerät (10) nach einem der Ansprüche 1 bis 9, wobei die kontaktierte Hülse (14) eine ringförmige Kontaktfläche (14D) aufweist, die so konfiguriert ist, dass sie mit mindestens einem Teil der Zunge (30) zusammenzuwirkt.

11. Schreibgerät (10) nach einem der Ansprüche 1 bis 9, wobei die erste Hülse (12) und die zweite Hülse (12) aus elektrischen Strom leitendem Polymermaterial sind.

## Claims

1. Writing instrument (10) having an axial direction (A), a circumferential direction (C), and a radial direction (R), said writing instrument comprising a first shaft (12) and a second shaft (14) which can pivot in relation to one another about the axial direction (A), and having a first distal end (10A) and a second distal end (10B) which is opposite the first distal end (10A) in the axial direction (A), a writing tip (16) being arranged on the first distal end (10A) side while a pad (18) for a capacitive screen is arranged on the second distal end (10B) side, the writing tip (16) and/or the pad (18) for a capacitive screen being retractable by pivoting the first shaft (12) in relation to the second shaft (14), **characterized in that** one shaft among the first shaft (12) and the second shaft (14), referred to as the contactor shaft, comprises a tongue (30) extending in the circumferential direction (C), said tongue being configured to establish electrical contact with the other shaft among the first shaft (12) and the second shaft (14), referred to as the contacted shaft, irrespective of the relative position of the first shaft (12) in relation to the second shaft (14).

2. Writing instrument (10) according to claim 1, wherein at least one portion of the tongue (30) engages with the contacted shaft (14) irrespective of the relative position of the first shaft (12) in relation to the second shaft (14).

3. Writing instrument (10) according to either claim 1 or claim 2, wherein the contactor shaft (12) has a fitting portion (12A) which is fitted inside the contacted shaft (14), the fitting portion (12A) comprising said tongue (30).

4. Writing instrument (10) according to any of claims 1 to 3, wherein the tongue (30) extends in an opening (12A21) extending in the circumferential direction (C), from an edge (12A21A) of said opening.

5. Writing instrument (10) according to any of claims 1 to 4, wherein the tongue (30) has the shape of a ring portion having a first circumferential end (30A) and a second circumferential end (30B) which is opposite the first circumferential end (30A), the first circumferential end (30A) being connected to the contactor shaft (12) while a portion of the second circumferential end (30BB) is configured to establish electrical contact with the contacted shaft (14).

6. Writing instrument (10) according to any of claims 1 to 5, wherein the tongue (30) has a distal end portion (30ABB), a projection (32) extending radially from said distal end portion (30BB).

7. Writing instrument (10) according to any of claims 1 to 6, wherein the tongue (30) is formed by an isostress beam.

8. Writing instrument (10) according to any of claims 1 to 7, wherein the first shaft (12) and the second shaft (14) are assembled with one another by means of a snap-fastening ring (26).

9. Writing instrument (10) according to claims 3 and 8, wherein the fitting portion (12A) comprises a support part (12A1) supporting the snap-fastening ring (26), the tongue (30) being arranged in a part (12A2) which is separate from said support part (12A1).

10. Writing instrument (10) according to any of claims 1 to 9, wherein the contacted shaft (14) has an annular contact surface (14D) configured to engage with at least one part of the tongue (30).

11. Writing instrument (10) according to any of claims 1 to 9, wherein the first shaft (12) and the second shaft (12) are made of a polymeric material which conducts an electrical current.
